# EUROPEAN PATENT SPECIFICATION

(11) **EP 0 805 290 B1**
(45) Date of publication and mention of the grant of the patent: **17.12.2003**
(21) Application number: 97830181.0
(22) Date of filing: 21.04.1997
(51) Int. Cl.: F16H 3/74

(54) **A device for continuously varying a rotative speed**
Stufenloser Drehgeschwindigkeitsvariator
Dispositif pour varier une vitesse rotative en manière continue

(30) Priority: 29.04.1996 IT RM960290
(43) Date of publication of application: 05.11.1997
(73) Proprietor: Grossi, Imperio, 00192 Roma (IT)
(72) Inventor: Grossi, Imperio, 00192 Roma (IT)
(74) Representative: Gristina, Giorgio

(56) References cited:
- FR-A- 516 793
- FR-A- 796 649
- FR-A- 854 166
- FR-A- 1 028 293
- FR-A- 2 634 532
- US-A- 4 077 278
- US-A- 5 171 194

## Description

The present invention relates to a device for continuously varying a rotative speed.

More particularly, the present invention relates to a device of the aforesaid type that allows a continuous variation of the speed to be obtained in an extremely simple and functional manner.

As is well known to all those who are skilled in the art, at present, automatic or not automatic speed variator wheelworks generally operate in speed steps with fixed ratios.

It is also known that in the latest years the utilization has become more and more developed of motor vehicles and motorcycles with automatic transmission, for all the advantages that such a solution presents for a driver, particularly in case of city path drive.

FR 516.793A discloses a device for continuously varying a rotative speed, including a first and a second differential assembly, each one including a plurality of functionally interconnected wheels, the first differential assembly being arranged on the drive shaft and the second differential assembly being arranged on the driven shaft, said first and second differential assembly reciprocally interacting through the coupling of at least two wheels of the first assembly with respective wheels of the second assembly.

FR 854 166 A discloses a device for continuously varying a rotative speed according to the preamble of claim 1.

According to the present invention, a device for continuously varying a rotative speed, having wheels of the same diameter includes a first crown gear integral with the drive shaft, a first counter-crown wheels, and planet wheels arranged within a first box that makes up the first planet wheel of the second differential assembly, a ring gear arranged on said first box, engaged, by means of second planet wheels, with a second counter-crown wheel, in turn integral with said first counter-crown wheel by means of a sleeve, said second planet wheels also engaging with a second box closed on a second sleeve that rotates on the driven shaft.

The present invention will be now described, as a matter of illustration, with particular reference to the figures of the annexed drawings, wherein:
Figure 1 schematically shows a first device known in the art;
Figure 2 schematically shows a second device known in the art;
Figure 3 shows the solution of Figure 2 in greater detail;
Figure 4 schematically shows an embodiment of the device according to the present invention;
Figure 5 schematically shows a detail of a device according to the present invention;
Figure 6 schematically shows a second embodiment of the detail of Figure 4;
Figure 7 shows a further embodiment in a side view, with asymmetric crown wheels;
Figure 8 shows the embodiment of Figure 7 in front view, and
Figure 9 is a schematic assembly view of the embodiment of Figure 7.

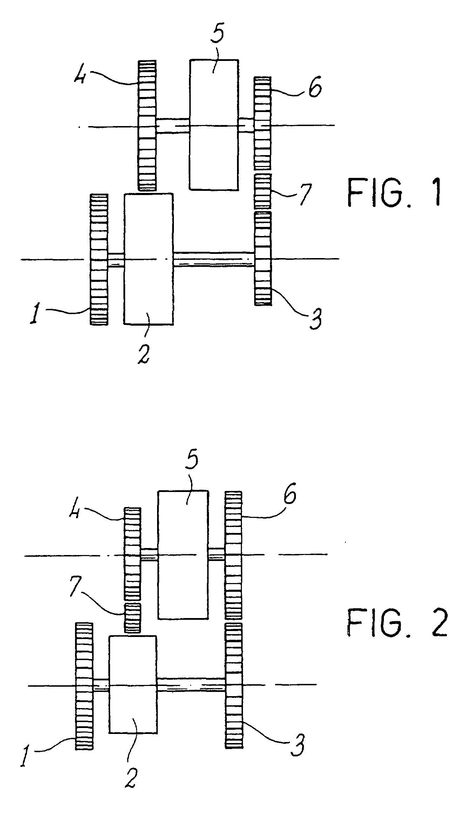

Firstly observing Figure 1, one can remark that the device or wheelwork, in its elementary form, is comprised of two differential mechanisms, assembled as shown.

The gear wheels are indicated with numerals 1 to 7.

The first differential, indicated with numerals 1, 2 and 3, provides crown gears 2 which are then integral with wheels 1 and 3, in a manner similar to what takes place in the axle of a motor vehicle.

The second differential is indicated with numerals 4, 5 and 6, and in this case too wheel 4 and wheel 6 are integral with the crown wheels included in wheel 5.

Wheel 2 and wheel 4 make up a pair. Wheel 3 and wheel 6 make up a pair through wheel 7, which operates as a rotation inverter.

Wheel 1 is the drive wheel and wheel 5 is the induced wheel.

In the following the operation will be described of the device shown in Figure 1.

To drive wheel 1 a right-hand or left-hand rotation can be imparted. Once wheel 1 is given the right-hand rotation, also wheel 2 rotates right-handedly, whilst wheel 3 rotates left-handedly. Obviously, wheel 4 and wheel 6 both rotate left-handedly.

Wheel 5, which is supposed initially free and without load, rotates left-handedly at maximum speed. By applying and increasing the load onto wheel 5 (up to an allowed limit), this one decelerates its rotation (this still in the constance of the revolutions of wheel 1).

In such a case wheel 6, under the stronger force of wheel 4, by differential effect, is induced to decelerate its left-hand rotation up to eventually remain stationary or to invert its rotation too, so becoming right-handed.

Obviously wheel 3 follows the destiny of wheel 6. If now we hypothezise (for a moment) that wheel 3 is stationary, as wheel 1 continues rotating in constance of number of revolutions, wheel 2 will rotate right-handedly (even if with a half of the number of revolutions with respect to wheel 1).

But in this case, then wheel 4, by differential effect on wheel 5, will return to urge and reinforce the rotation of wheel 6.

In such a way the thrust taken at the output is fed to the input to reinforce the thrust of the motor itself.

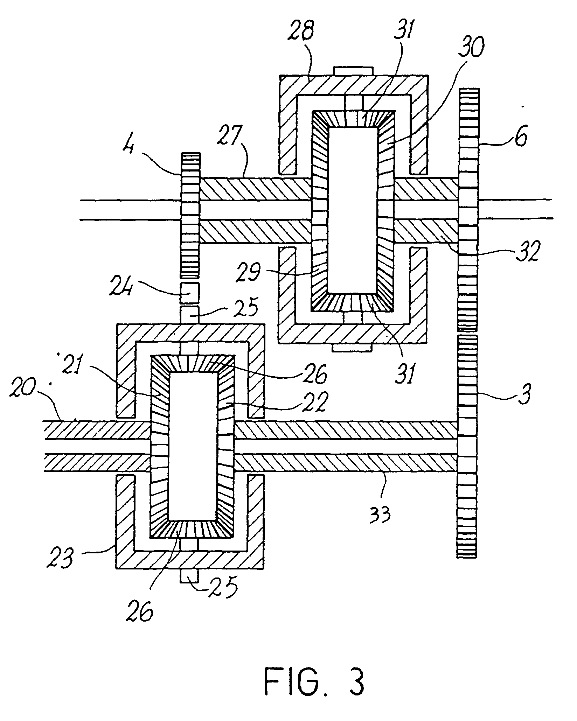

Referring now to Figures 2 and 3, a second device is shown.

In fact, in this case, the two differential mechanisms that make up the described wheelwork, are assembled in a different manner.

In the shown solution, wheel 7 is interposed between wheel 2 and wheel 4, and equally operates as a motion inverter.

In this case also the device operates according to the same principle of the other one and realizes the same results.

Obviously, as already mentioned, for an output rotation having the desired characteristics, it is necessary to evaluate and determine the diameter and the couplings of the gear wheels.

With particular reference to Figure 3, with numeral 20 the drive shaft is indicated, whilst the first crown wheel and the first counter-crown wheel are respectively indicated with numerals 21 and 22.

Planet wheel 26 is housed in box 23 and the coupling with wheel 4 takes place by means of the motion inverter 24 that couples with gear wheel 25.

A sleeve 33 is provided between crown wheel 22 and wheel 3.

Inside box 23 planet wheels 26 are provided.

Between wheel 4 and crown wheel 29 a second sleeve 27 is provided.

Inside box 28 the second crown wheel 29, the second counter-crown wheel 30 and planet wheels 31 are arranged.

Counter-crown wheel 30 is connected with wheel 6 by means of a third sleeve 32.

A model experimented with success, relevant to Figures 2 and 3, had the wheel with the diameters mentioned below:

| | |
|---|---|
| R1 ⌀ 9.5 cm | R2 ⌀ 19 cm |
| R3 ⌀ 6.5 cm | R4 ⌀ 17 cm |
| R5 ⌀ 19 cm | (induced wheel ⌀ uninfluential) |
| R6 ⌀ 17 cm | R7 ⌀ uninfluential |

In the experimentation of the described devices, as an alternative to the gear wheels having different diameters, gear wheels of the same diameter have been assembled, but in that case asymmetric differential mechanisms have been employed. The result, evaluated on the induced wheels, has been equivalent.

Still referring to Figures 2 and 3, as wheel 2 has the same right-hand rotation sense of wheel 4, wheel 2 itself can be utilized as the first member of the second differential mechanism.

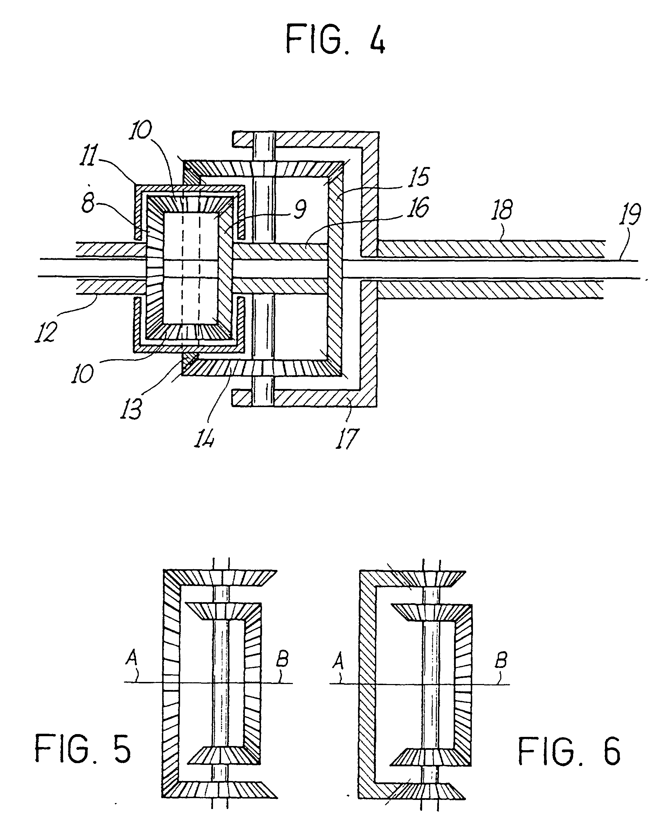

In other words, referring now to Figure 4, according to the present invention crown wheel 8, counter-crown wheel 9 and planet wheels 10 are arranged within box 11, in that crown wheel 8 is integral with drive shaft 12.

Said box 11 operates as it were the first crown wheel of the second differential mechanism of Figure 2, indicated with numerals 4, 5 and 6.

On said box 5 gear wheel 13 is arranged that, through planet wheel 14, engages counter-crown wheel 15.

Said counter-crown wheel 15, as it is integral with crown wheel 9, through sleeve 16, transmits a left-handed rotation thrust thereto, in a manner similar to what took place between gear wheels 6 and 3 of Figure 2.

Said planet wheels 14 also engage with cylindrical box 17 that closes onto a sleeve 18 which, in turn, rotating right-handedly about pin 19, goes to make up the induced shaft.

By employing asymmetric differentials, the device according to the present invention, for a given rotation of the drive shaft can provide a rotation of the induced shaft with different characteristics.

In fact, it can have a greater or a lesser acceleration or a greater or lesser ratio of the maximum speed to the minimum speed.

Obviously, to achieve that, it is suitable to determine the various speeds of the internal members, determining the ratios between the gear wheels.

Asymmetric differentials present crown wheels with different diameters and the dual planet wheels assembled on the same axis them too have different diameter and computed distances.

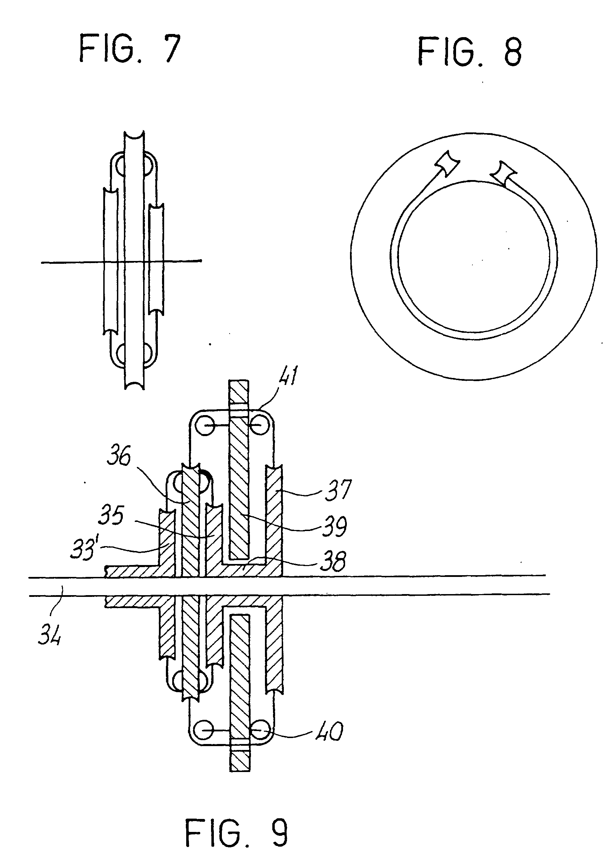

Two examples of symmetric differentials are shown in Figures 5 and 6.

Axis A and axis B are interchangeable with each other.

An experimental model has been realized, that has run according to the formulated hypothesis, so proving the validity of the hypothesis itself.

In particular it took place that at a constant number of revolutions of the drive wheel, the induced wheel has rotated, firstly without load, at the maximum number of revolutions. When thereafter the load has been applied, gradually increasing it, likewise the number of revolutions of the induced wheel has decreased down to a minimum. When a whatever load (suitable for the system) has been instantaneously applied, the induced load has likewise started rotating with an adequate speed.

The ratio of the minimum speed to the maximum speed has always been verified to be greater than four.

The experimental model assembled "gear wheels" with the diameters indicated below:

| | |
|---|---|
| R7 = ⌀ uninfluential | - 3R1 ⌀ uninfluential = 9.5 cm |
| R2 = ⌀ 19 cm | -R3 ⌀ 6.5 cm |
| R4 = ⌀ 11.4 cm | - R5 ⌀ 19 cm (induced wheel = uninfluential) |
| R6 = ⌀ 8.5 cm. | |

Obviously, these sizes and these data have been referred as a matter of example and absolutely not of restriction. The choice of the various pairs and the various combinations thereof allow an output rotation of the wheelwork to be had having the desired characteristics.

As already mentioned, the device according to the present invention can also be realized by employing pulleys and transmission belts, a solution that can be suitable in some cases, being very silent.

An exemplification embodiment of the device utilized with pulleys and belts is shown in Figures 7-9.

The device includes a first crown wheel 33', with a drive shaft 34 and a first counter-crown gear 35.

Moreover, a central wheel, or ring, 36, that also performs the function of the first crown gear of the second differential assembly, is provided.

With numeral 37 the second counter-crown gear is provided, which is integral with the first counter-crown gear 35 through the sleeve 38.

The driven wheel is indicated with numeral 39, whilst the wheels for the sliding of the transmission means are indicated with numeral 40 and the belts with numeral 41.

The present invention has been described as a matter of illustration, but not of restriction, according to preferred embodiment thereof, but it is to be understood that variations and/or modifications can be made by those skilled in the art without so departing from the relevant scope of protection, as defined by the enclosed claims.

## Claims

1. A device for continuously varying a rotative speed including a first and a second differential assembly, each one including a plurality of functionally interconnected wheels, the first differential assembly being arranged on the drive shaft and the second differential assembly being arranged on the driven shaft, said first and second differential assembly reciprocally interacting through the coupling of at least two wheels of the first assembly with respective to wheels of the second assembly, whereby the device, having wheels of the same diameter, is **characterized in that** it includes a first crown gear (8) integral with the drive shaft (12), a first counter-crown wheel (9) and planet wheels (10, 10) arranged within a first box (11) that makes up the first crown wheel of the second differential assembly, a ring gear (13) arranged on said first box, engaged, by means of second planet wheels (14) with a second counter-crown wheel (15) in turn integral with said first counter-crown wheel (9) by means of a sleeve (16), said second planet wheels (14) also engaging with a second box (17) closed on a second sleeve (18) that rotates on the driven shaft (19).

## Patentansprüche

1. Eine Vorrichtung für die ständige Variation einer Drehgeschwindigkeit, die mit einem ersten und einem zweiten Gesamtdifferential ausgerüstet ist, wobei jedes mehrere funktionell miteinander verbundene Räder aufweist; das erste Gesamtdifferential ist auf der Antriebswelle und das zweite Gesamtdifferential auf der Antriebswelle untergebracht, wobei die Wechselwirkung der beiden (des ersten und des zweiten) Gesamtdifferentiale durch das Einschalten von mindestens zwei Rädern des ersten Gesamtdifferentials gegenüber den Rädern des zweiten Gesamtdifferentials zustande kommt, ausgezeichnet durch die Tatsache, daß diese Vorrichtung, die mit Rädern des gleichen Durchmessers ausgerüstet ist, ein erstes mit der Antriebswelle (12) ein Ganzes ausmachendes Zahnrad einbegreift, ein zweites Gegenzahnrad (9) und Planetenräder (10, 10), die im ersten Gehäuse (11) untergebracht sind, die das erste Zahnrad des zweiten Gesamtdifferentials integriert, einen auf dem genannten Gehäuse vorgesehenen Zahnkranz (13), der über das zweite Planetenrad (14) mit einem zweiten Gegenzahnrad (15) in Eingriff kommt, das sich zusammen mit dem ersten Gegenzahnrad (9) über eine Muffe (16) dreht; dieses zweite Planetenrad (14) kommt außerdem mit einem zweiten - auf einer zweiten Muffe untergebrachten - geschlossenen Gehäuse (18) in Eingriff, das sich um die Antriebswelle (19) dreht).

## Revendications

1. Un dispositif pour varier continuellement une vitesse de rotation qui comprend un premier et un deuxième ensemble différentiel, comportant chacun plusieurs roues à connexion fonctionnelle; le premier ensemble différentiel est installé sur l'arbre de commande et le deuxième ensemble différentiel sur l'arbre de commande; ce premier et ce deuxième ensemble différentiel agissent l'un sur l'autre par l'enclanchement d'au moins deux roues du premier ensemble différentiel sur les roues du deuxième ensemble, **caractérisé par le fait que** ce dispositif, ayant des roues de même diamètre, comprend une première roue dentée (8) intégrale avec l'arbre de commande (12), une deuxième roue dentée en opposition (9) et des engrenages satellites (10, 10), installés à l'intérieur de la première boîte (11) qui complète la première roue dentée du deuxième ensemble différentiel, un engrenage à couronne (13) installé sur cette première boîte, engagé au moyen du deuxième engrenage satellite (14) par une deuxième roue dentée en opposition (15) qui tourne de manière intégrale avec la première roue dentée en opposition (9) au moyen d'un manchon (16), ce deuxième engrenage satellite (14) s'engageant en outre dans une deuxième boîte (17) fermée sur un deuxième manchon (18) qui roule sur l'arbre de commande (19).
